Europäisches Patentamt

European Patent Office

Office européen des brevets

(11) Publication number: **0012419**
**A1**

(12) **EUROPEAN PATENT APPLICATION**

(21) Application number: **79105057.8**

(22) Date of filing: **10.12.79**

(51) Int. Cl.³: **C 09 K 9/02, G 02 F 1/17**

(30) Priority: **11.12.78 US 968319**

(43) Date of publication of application: **25.06.80**
**Bulletin 80/13**

(84) Designated Contracting States: **DE FR GB IT**

(71) Applicant: **International Business Machines Corporation, Armonk, N.Y. 10504 (US)**

(72) Inventor: **Shattuck, Meredith David, 6664 Pebblewood Court, San Jose, California 95120 (US)**

(74) Representative: **Chaudhry, Mohammad Saeed, IBM United Kingdom Patent Operations Hursley Park, Winchester Hants, S021 2JN (GB)**

(54) **An electrochromic display device.**

(57) A medium for use in an electrochromic display device is provided. The medium comprises methyl ethyl ketone as the solvent, N,N,N′,N-tetramethyl-p-phenylenediamine as the oxidant, heptyl viologen tetrafluoroborate as the reductant and tetrabutylammonium tetrafluoroborate as the conductive salt.

EP 0 012 419 A1

1

# AN ELECTROCHROMIC DISPLAY DEVICE

The present invention relates to an electrochromic display device and more particularly relates to a medium for use therein.

Electrochromic display devices of several types are well known in the prior art. It is, however, believed that no prior art discloses the specific combination of ingredients for the medium used in the present invention.

U.S. Patent 3,451,741 discloses an electrochromic process and a device for use therein. As may be seen from reading that patent, a reversible electrochromic display device may be made by confining a reactive medium between two electrically conductive electrodes, at least one of which is transparent. This medium comprises an oxidant/reductant pair contained in solvent with a conductive salt. This patent gives many examples of suitable materials, but does not disclose the combination of ingredients which is the subject of the present invention.

U.S. Patent 3,806,229 relates to the use of viologen materials in electrochromic display devices. This patent broadly describes the use of viologen reductants, and of N,N,N',N'-tetramethyl p-phenylenediamine as an oxidant. The patent also discloses the use of several solvents including acetone, acetonitrile, glutaridinitrile, benzonitrile, propylene carbonate, nitromethane and acetic acid anhydride.

2

It has now been found that a reversible electrochromic display suitable for use over very long periods
of time and having a very high electrochromic efficiency
may be prepared using a certain specific combination of
ingredients in the medium. This combination of ingredients consists essentially of methyl ethyl ketone as
the solvent, N,N,N',N'-tetramethyl-p-phenylenediamine
as the oxidant, heptyl viologen tetrafluoroborate as
the reductant and tetrabutylammonium tetrafluoroborate
as the conductive salt. When all of these particular
ingredients are used in combination, the resulting
electrochromic display has cycle times considerably
longer than any previously described.

The concentrations of the oxidant N,N,N',N'-
tetramethyl-p-phenylenediamine and the reductant heptyl
viologen tetrafluoroborate should be approximately
equal to each other on a molar basis. At least about
0.01 moles per litre for each should be used. Saturated
solutions of the ingredients may be used. It is possible
to use a medium in which undissolved solid material
remains. In general, however, it is preferred that the
concentrations of both the oxidant and reductant be in
the range of about 0.2 to about 0.4 moles per litre.
The mixture should be anhydrous.

An electrochromic display medium consisting essentially of the following formulation was prepared. 0.2
moles per litre N,N,N',N'-tetramethyl-p-phenylene-
diamine, 0.2 moles per litre heptyl viologen tetrafluoroborate, 0.4 moles per litre tetrabutylammonium tetrafluoroborate. The solvent was anhydrous methyl ethyl
ketone. The medium was placed between two electrically
conductive electrodes, one of which was transparent.
Using matrix addressing, the medium was employed in a

0012419

3

four-character display panel with a reservoir of solution behind the cell. The formulation was cycled for more than 1500 hours without measurable degradation. At the end of the 1500 hours, the test was stopped because the equipment was needed for other experiments.

In like manner, a formulation was made consisting essentially of 0.4 moles per litre of N,N,N',N'-tetramethyl-p-phenylenediamine, 0.4 moles per litre of heptyl viologen tetrafluoroborate and 0.4 moles per litre of tetrabutylammonium tetrafluoroborate with anhydrous methyl ethyl ketone as the solvent. This medium was cycled in a four-character panel without a reservoir for more than 150 hours without any observable change in electro/optical properties.

The medium of the present invention is capable of repeated use for hundreds or even thousands of hours. In addition, the medium possesses a high electrochromic efficiency and is colourless in the "OFF" state.

1

CLAIMS

1. A reversible electrochromic display device comprising a reactive medium between two electrically conductive electrodes, at least one of which is transparent, characterised in that the reactive medium includes heptyl viologen tetrafluoroborate as a reductant, N,N,N',N'-tetramethyl-p-phenylene-diamine as an oxidant, tetrabutylammonium tetrafluoroborate as a conductive salt and methyl ethyl ketone as the solvent.

2. A display device as claimed in Claim 1, wherein the molar concentration of the oxidant and the molar concentration of the reductant are approximately equal.

3. A display device as claimed in Claim 1 or 2, wherein the molar concentration of the oxidant and the molar concentration of the reductant are each within the range of from about 0.2 to about 0.4 moles per litre.

4. A display device as claimed in any one of the preceding claims wherein the medium is anhydrous.

| | DOCUMENTS CONSIDERED TO BE RELEVANT | | | CLASSIFICATION OF THE APPLICATION (Int. Cl. ³) |
|---|---|---|---|---|
| Category | Citation of document with indication, where appropriate, of relevant passages | | Relevant to claim | |
| D,A | US - A - 3 806 229 (PHILIPS)  * Claims 1,2; column 5, line 55; column 6, line 8; table IV, line 10; table V, line 6 *  -- | | 1 | C 09 K 9/02  G 02 F 1/17 |
| A | US - A - 3 641 034 (POLAROID) | | | |
| A | FR - A - 2 228 262 (PHILIPS) | | | |
| A | FR - A - 2 351 463 (PHILIPS) | | | |
| A | FR - A - 2 375 314 (IBM) | | | TECHNICAL FIELDS SEARCHED (Int.Cl. ³) |
| A | GB - A - 1 507 834 (EMI LTD.) | | | C 09 K 9/02  G 02 F 1/17 |
| A | FR - A - 2 170 525 (PHILIPS)  ---- | | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 19-03-1980 | VITZTHUM VON ECK-STAEDT |

EPO Form 1503.1 06.78